Europäisches Patentamt

(19) European Patent Office

Office européen des brevets

(11) Numéro de publication : **0 083 268**
**B1**

(12) **FASCICULE DE BREVET EUROPÉEN**

(45) Date de publication du fascicule du brevet :
15.04.87

(51) Int. Cl.⁴ : **G 03 B   3/10**

(21) Numéro de dépôt : **82402301.4**

(22) Date de dépôt : **15.12.82**

(54) **Procédé de réglage automatique de la netteté d'images projetées sur un écran et dispositifs pour la mise en oeuvre dudit procédé.**

(30) Priorité : **17.12.81 FR 8123562**

(43) Date de publication de la demande :
**06.07.83 Bulletin 83/27**

(45) Mention de la délivrance du brevet :
**15.04.87 Bulletin 87/16**

(84) Etats contractants désignés :
**BE CH DE FR GB IT LI LU**

(56) Documents cités :
**AT-B-   348 860
DE-A- 2 922 002
FR-A- 2 053 071
FR-A- 2 385 118
FR-A- 2 394 106**

(73) Titulaire : **CENTRE NATIONAL D'ETUDES SPATIALES
129, Rue de l'Université
F-75007 Paris (FR)**

(72) Inventeur : **Breton, Jacques Robert
6, Rue des Remparts Coligny
Venerque F-31120 Portet Sur Garonne (FR)**

(74) Mandataire : **de Boisse, Louis
CABINET DE BOISSE 37, Avenue Franklin D. Roosevelt
F-75008 Paris (FR)**

## Description

L'invention concerne un procédé de réglage automatique de la netteté d'images projetées sur un écran et, en particulier, d'images obtenues à partir de photogrammes et des dispositifs pour la mise en œuvre dudit procédé.

Il est courant dans les appareils de projection de vues fixes ou animées d'avoir des images dont la netteté est approximative. Ceci est dû au fait que la mise au point est en général faite au début de la projection sur un photogramme placé dans une position donnée par rapport à l'objectif, position qui est rarement reprise par les photogrammes suivants. Le phénomène est particulièrement sensible dans la projection, vue par vue, de diapositives, car celles-ci sont montées dans des supports qui peuvent prendre des positions variables dans le passe-vue, un certain jeu étant nécessaire pour permettre le passage de divers types de supports.

Le brevet français 2 385 118 décrit, par exemple, un dispositif susceptible de remédier au défaut de netteté. Il est constitué d'un dispositif de projection auxiliaire qui envoie sur la surface du photogramme où il se réfléchit un faisceau de rayons infrarouges.

Le faisceau réfléchi passe dans un dispositif de réglage de positionnement comportant une cellule détectrice. Cette cellule, composée de deux éléments de silicium séparés par une fente, produit des signaux qui sont envoyés à un dispositif électronique commandant un moteur. Le moteur entraîne dans un sens ou dans l'autre une came qui modifie le réglage de l'objectif. Un tel dispositif ne fait que maintenir le photogramme en une position donnée fixée au début de la projection par l'opérateur en fonction de son appréciation personnelle de la netteté de l'image sur l'écran.

L'invention a pour objet un dispositif de réglage de la netteté d'une image projetée dans lequel la netteté de l'image sur l'écran est contrôlée en permanence et réajustée automatiquement par modification de la distance photogramme-objectif. Cet objet est atteint par un procédé comme décrit à la revendication 1 et un dispositif comme décrit à la revendication 4.

Les explications et figures données ci-après à titre d'exemple permettront de comprendre comment l'invention peut être réalisée.

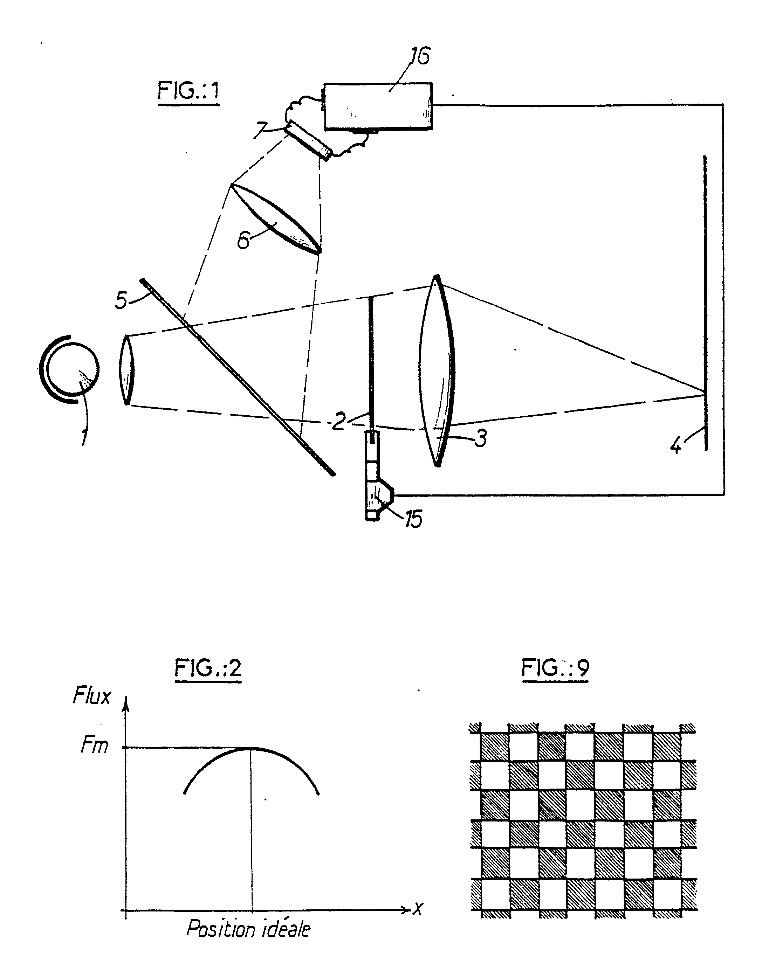

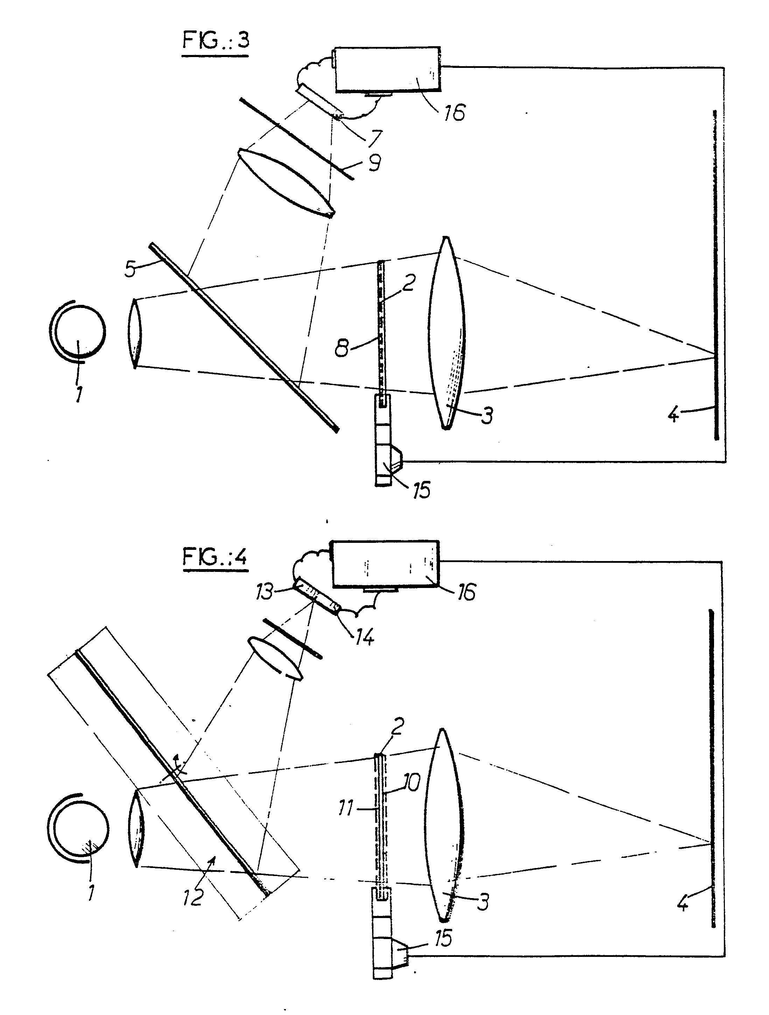

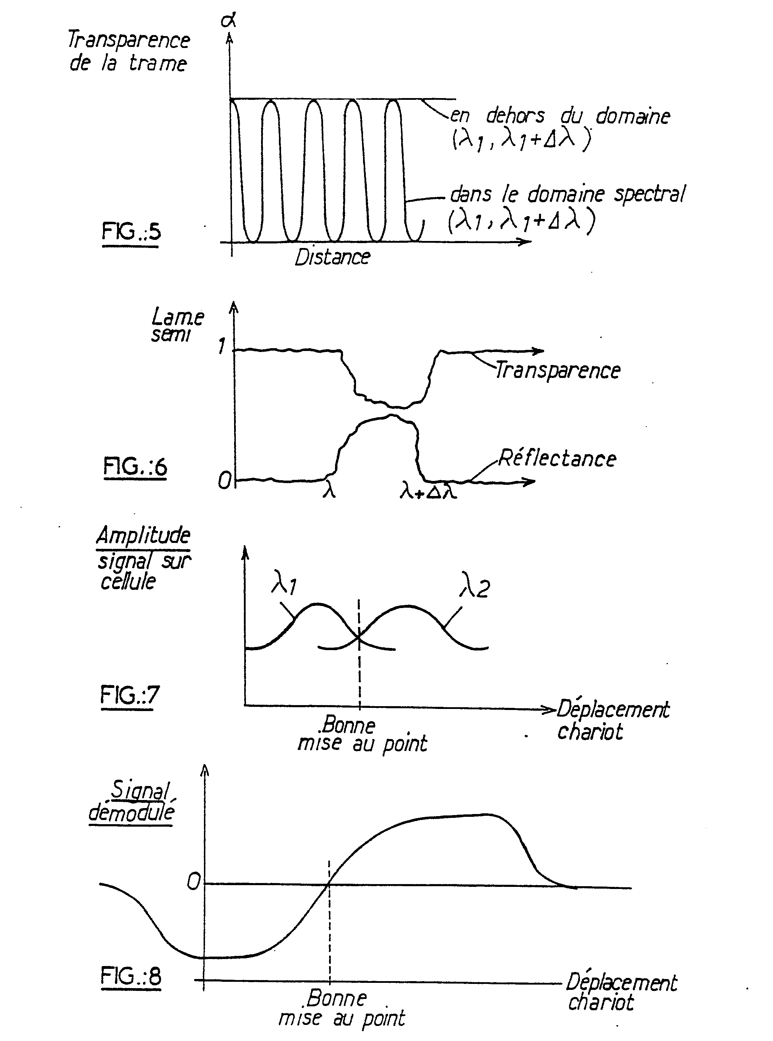

La figure 1 représente un schéma de principe d'une première forme de réalisation du dispositif selon l'invention. La figure 2 représente le flux transmis en fonction de la position du photogramme. La figure 3 est un schéma de principe d'une deuxième forme de réalisation. La figure 4 représente schématiquement une troisième forme de réalisation. La figure 5 représente la transparence d'une trame de réglage. La figure 6 montre les caractéristiques d'une lame semi-transparente utilisée dans les deuxième et troisième formes de réalisation. La figure 7 montre les signaux reçus sur les cellules du dispositif selon la troisième forme de réalisation. La figure 8 montre le signal obtenu sur une cellule recevant la modulation des flux $\lambda_1$ et $\lambda_2$. La figure 9 représente un exemple de trame utilisée dans les dispositifs mettant en œuvre le procédé selon l'invention.

Le dispositif de projection, par exemple un projecteur de diapositives ou de films, comprend (Fig. 1) schématiquement une source lumineuse 1 avec condenseur, un porte-vue ou film dans lequel passe le photogramme 2, une optique de projection ou objectif 3. L'objectif 3 permet de former une image de la diapositive ou du film sur l'écran de projection 4. L'image fixée sur la pellicule photographique ou cinématographique sera désignée par la suite par « photogramme ».

Si la conjugaison du plan objet (le photogramme) et du plan image (l'écran de projection) est réalisée avec précision, on dit que la mise au point est bonne et, dans ce cas, l'image d'un point sur le photogramme sera un point sur l'écran à la diffusion près.

Si la conjugaison est imparfaite, l'image du point sur l'écran sera une tache d'autant plus étendue que la mise au point sera mauvaise. Donc un défaut de mise au point produira une image floue sur l'écran, et l'image de l'écran sur le photogramme sera encore plus floue.

Comme un photogramme est formé de zones de transparence différente, une partie de la lumière en retour va être transmise, une partie absorbée, et éventuellement le reste sera réfléchi.

On démontre mathématiquement que le flux transmis par le photogramme dans l'illumination en retour, est maximum lorsque les deux plans image objet sont parfaitement conjugués.

Le procédé de réglage automatique de la netteté d'une image d'un photogramme projeté sur un écran, consiste à recueillir un premier flux lumineux en retour de l'image formée sur l'écran au travers d'au moins une trame fixée sur ou près du photogramme pour une première distance photogramme-objectif, à comparer sa luminance à celle d'un deuxième flux en retour de l'image formée sur l'écran au travers de la même trame pour une deuxième distance-photogramme objectif et à modifier la distance photogramme-objectif pour obtenir le ou les flux lumineux maximaux en retour.

Selon une première forme de réalisation du dispositif pour la mise en œuvre du procédé, représentée figure 1, on utilise une seule trame constituée par les zones de transparence du photogramme lui-même. Le dispositif comprend une lame semi-transparente 5, inclinée, disposée entre la source lumineuse 1 et le photogramme 2 ; un système optique de concentration 6 monté devant un détecteur ou cellule photo-électrique 7, le système de concentration et la cellule étant disposés de préférence à l'extérieur de la zone de dispersion de la lumière comprise entre la source lumineuse et le photogramme. Le support de photogramme 2 est entraîné par un dispositif de déplacement 15 longitudinal alternatif comportant un moteur à deux sens de rotation. L'amplitude du mouvement est commandée par un dispositif électronique 16 recevant les signaux de la cellule photo-électrique 7 pour les deux positions extrêmes de la course du photogramme.

Le dispositif électronique 16, dans un mode de réalisation, a pour fonction de délivrer un signal d'erreur proportionnel à la première harmonique du flux reçu par la cellule photo-détectrice 7.

Il est à remarquer que, du point de vue optique, le déplacement du support de photogramme 2 ou de l'objectif 3 est équivalent. Dans la suite de la description, on utilisera une notion équivalente qui est la distance photogramme-objectif.

Le flux transmis en fonction de la position x longitudinale du photogramme (Fig. 2) peut s'exprimer selon la formule

$$F = F_m - \alpha(x - X_i)^2 + \cdots$$

$X_i$ étant la position longitudinale idéale de mise au point, $\alpha$ étant un coefficient dépendant de la structure de l'image.

La position x du photogramme subit une oscillation sinusoïdale $\Delta X$ de pulsation $\omega$ autour d'une position de référence $X_r$.

$$x - X_r = \Delta X \sin \omega t.$$

Le flux aura une variation dans le temps de la forme :

$$F = F_m - \alpha(X_r - X_i + \Delta X \sin \omega t)^2 + \cdots$$

$$F = F_m - \alpha(X_r - X_i)^2 - 2 \alpha \Delta X(X_r - X_i) \sin \omega t - \alpha \Delta X^2 \left( \frac{1 - \cos 2 \omega t}{2} \right) + \cdots$$

$$F = F_m - \alpha(X_r - X_i)^2 - \alpha \frac{\Delta X^2}{2} - 2 \alpha \Delta X(X_r - X_i) \sin \omega t + \alpha \frac{\Delta X^2 \cos 2 \omega t}{2} + \cdots$$

La détection de la première harmonique permet donc d'obtenir un signal proportionnel à l'écart de position, avec un signe correspondant à la direction de la correction à effectuer.

La détection peut se faire par filtrage ordinaire ou par détection synchrone.

La procédure de recherche de la mise au point peut être effectuée à $\Delta X$ (amplitude d'oscillation) constant, ou à $\Delta X$ progressivement réduit au fur et à mesure de la convergence vers la position optimale.

Le deuxième exemple de réalisation du dispositif représenté figure 3, montre un photogramme sur lequel est superposée, par exemple, une pellicule portant une trame 8. Cette trame a une répartition (Fig. 5) de transparence à texture fine et contrastée, par exemple sinusoïdale dans le domaine spectral défini entre $\lambda, \lambda + \Delta\lambda$, $\Delta\lambda$ étant de l'ordre de 5 à 10 nm et est complètement transparente en dehors de ce domaine.

Selon une autre forme de réalisation de la trame, celle-ci est intégrée au substrat du photogramme.

Le dispositif comporte dans cette réalisation une lame inclinée 5 partiellement réfléchissante dans le domaine $\lambda, \lambda + \Delta\lambda$ et transparente à l'extérieur de ce domaine (Fig. 5).

La longueur d'onde de fonctionnement est choisie dans le bleu, longueur d'onde pour laquelle la sensibilité de l'œil est moindre.

Un dispositif de déplacement 15 assurera, comme dans l'exemple précédent, une variation de la distance photogramme-objectif selon un mouvement alternatif d'amplitude maximale $\Delta X$.

Ce procédé à trame indépendante des zones de transparence du photogramme, permet de choisir une texture plus ou moins serrée définissant par elle-même la finesse de la conjugaison, donc la mise au point. En outre, la détection du flux en retour peut se faire dans une bande spectrale étroite définie par un filtre interférentiel 9 disposé devant la cellule, ce qui permet une bonne réjection de toute la lumière diffusée dans le projecteur.

La variante du procédé utilisé dans un troisième exemple de réalisation d'un dispositif montré figure 4 comporte deux trames 10, 11 disposées de part et d'autre du photogramme. Ces trames ont une répartition de transparence, par exemple sinusoïdale, respectivement dans deux domaines spectraux voisins

$$\lambda_1, \lambda_1 + \Delta\lambda_1 \text{ et } \lambda_2, \lambda_2 + \Delta\lambda_2.$$

La lame inclinée 12 a les mêmes deux domaines spectraux de réflexion partielle disposés séparément sur la lame et sépare les flux $\lambda_1$ et $\lambda_2$ qui sont alors mesurés par deux cellules 13, 14 sensibles chacune

dans un domaine $\lambda_1$ et $\lambda_2$.

Les signaux délivrés par les cellules en fonction de la variation de distances photogramme-objectif se présentent sous une forme de deux courbes dont les maxima sont situés de part et d'autre de leur point d'intersection (Fig. 7), ce point d'intersection correspondant à la bonne mise au point.

Des moyens électroniques 16 classiques délivrent un signal de commande à un dispositif de déplacement 15 comprenant un moteur à deux sens de rotation qui ajuste la distance photogramme-objectif.

Selon une autre réalisation représentée Figure 4, la lame inclinée 12, fixe, est remplacée par un disque présentant deux secteurs dont les domaines spectraux de réflexion sont $\lambda_1$ et $\lambda_2$, animé d'un mouvement de rotation rapide. On reçoit les deux flux en retour sur une cellule unique qui mesure la modulation $\lambda_1 \rightarrow \lambda_2$. Un dispositif électronique 16 de détection synchrone donne l'écart entre les flux $\lambda_1$ et $\lambda_2$. La figure 8 représente le signal démodulé obtenu en fonction de la distance photogramme-objectif. Lorsque l'écart entre les flux $\lambda_1$ et $\lambda_2$ est nul, les deux trames sont symétriques par rapport au plan de bonne mise au point où se trouve le photogramme.

Les deux réalisations précédentes à deux trames présentent l'avantage de maintenir le photogramme dans le plan de bonne mise au point.

La ou les trames utilisées dans les dispositifs précédemment décrits peuvent être réalisées, par exemple sous forme d'une répartition de transparence de texture fine et contrastée, par exemple sinusoïdale ou en damier (Fig. 9), obtenue de manière connue par dépôt de couches au travers d'un masque. Dans la trame en damier, certains carrés sont totalement transparents dans toutes les longueurs d'onde. D'autres sont transparents dans toutes les longueurs d'onde sauf dans un domaine étroit de quelques nm, où ils présentent une réflectance significative (entre 10 et 30 % par exemple). Le pas de ce maillage peut être de quelques dizaines de micromètres.

La texture de la trame définit par elle-même la finesse de la conjugaison.

La longueur d'onde de fonctionnement sera choisie de préférence dans le bleu.

La modification de la distance photogramme-objectif est obtenue soit par déplacement du passe-vue, soit d'une manière plus simple par déplacement de l'objectif ou d'un élément de l'objectif.

Le procédé, selon l'invention, peut être également utilisé pour des mesures de distance de l'ordre de quelques mètres. Dans ce cas, une mire de haute définition serait placée au plan focal du projecteur, l'objet étudié servant de réflecteur diffus.

## Revendications

1. Procédé de mise au point automatique d'images projetées d'un photogramme sur un écran, caractérisé en ce que l'on envoie un flux lumineux, au travers du photogramme et d'au moins une trame fixée sur ou près du photogramme, dans un objectif pour former l'image du photogramme sur l'écran ;
— on recueille un premier flux lumineux, obtenu en retour de l'image formée sur l'écran, au travers de l'objectif, de la trame et du photogramme pour une première distance photogramme-objectif ;
— on compare la luminance dudit premier flux à celle d'un deuxième flux, obtenu en retour de l'image formée sur l'écran, au travers de l'objectif, de la trame et du photogramme pour une deuxième distance photogramme-objectif ;
— on modifie la distance photogramme-objectif de façon à obtenir un flux lumineux en retour maximum.

2. Procédé selon la revendication 1, caractérisé en ce que l'on donne à la trame une répartition sinusoïdale de transparence dans un domaine spectral défini, la trame étant transparente en dehors de ce domaine.

3. Procédé selon la revendication 1 ou 2, caractérisé en ce que l'on place, en avant et en arrière du photogramme, une trame ayant une répartition de transparence à texture fine et contrastée respectivement dans deux domaines spectraux définis, on sépare les flux en retour selon leur domaine spectral respectif, on compare la luminance de ces deux flux et on modifie la distance photogramme-objectif pour obtenir les deux flux maximaux.

4. Dispositif pour la mise en œuvre du procédé, selon l'une des revendications 1 à 3, dans un appareil de projection comportant une source lumineuse et son condenseur, un porte-film portant un photogramme (2), un objectif (3) projetant l'image du photogramme (2) sur un écran (4) de projection, un détecteur photoélectrique (7), un dispositif (16) d'analyse des signaux issus du détecteur (7) qui commande des moyens (15) pour modifier la mise au point, caractérisé en ce que le dispositif comporte au moins une trame (2, 8, 10, 11) disposée sur ou près du photogramme (2), une lame inclinée (5) semi-réfléchissante placée sur le trajet lumineux entre le condenseur et le photogramme (2) de façon à réfléchir sur le détecteur (7) le flux lumineux en retour de l'image formée sur l'écran (4), au travers de l'objectif (3), de ladite trame (2, 8, 10, 11) et du photogramme (2).

5. Dispositif selon la revendication 4, caractérisé en ce que la trame est formée par les zones de transparence du photogramme lui-même.

6. Dispositif selon la revendication 4 ou 5, caractérisé en ce que la trame a une répartition de transparence à texture fine et contrastée dans un domaine spectral défini, et en ce que la lame inclinée est semi-réfléchissante dans ce domaine spectral.

7. Dispositif selon la revendication 6, caractérisé en ce que le domaine spectral défini est centré approximativement dans le bleu et couvre environ 5 à 10 nm.

8. Dispositif selon la revendication 4, caractérisé en ce que des trames (11, 12) disposées devant et derrière le photogramme (2) ont une répartition de transparence à texture fine et contrastée respectivement dans deux domaines spectraux définis, en ce que la lame inclinée (12) semi-réfléchissante est constituée de deux parties, chacune centrée dans un des deux domaines spectraux, et en ce que le détecteur photo-électrique est constitué de deux cellules (13, 14) sensibles chacune dans un des domaines spectraux.

9. Dispositif selon la revendication 4, caractérisé en ce que des trames (11, 12) disposées devant et derrière le photogramme (2) ont une répartition de transparence à texture fine et contrastée respectivement dans deux domaines spectraux définis, en ce que la lame inclinée (12) semi-réfléchissante est constituée d'un disque tournant, formé de deux parties, chacune centrée dans un des domaines spectraux et en ce que le détecteur photo-électrique est constitué d'une seule cellule sensible dans les deux domaines spectraux.

10. Dispositif selon l'une quelconque des revendications 4 à 9, caractérisé en ce que la répartition de transparence de la trame est sinusoïdale.

11. Dispositif selon l'une quelconque des revendications 4 à 9, caractérisé en ce que la répartition de transparence de la trame est en damier.

## Claims

1. A process for automatic focussing of images projected from a photogram on to a projection screen, characterised by passing a light flux through the photogram and at least one screen member which is fixed on or close to the photogram, into an objective, to form the image of the photogram on the projection screen ;
— collecting a first light flux obtained by return from the image formed on the projection screen, through the objective, the screen member and the photogram, for a first photogram-objective distance ;
— comparing the luminance of said first flux to that of a second flux obtained by return from the image formed on the projection screen, through the objective, the screen member and the photogram, for a second photogram-objective distance ; and
— modifying the photogram-objective distance so as to obtain a maximum return light flux.

2. A process according to claim 1 characterised by giving the screen member a sinusoidal distribution in respect of transparency in a defined spectral region, the screen member being transparent outside of said region.

3. A process according to claim 1 or claim 2, characterised by positioning, in front of and behind the photogram, a screen member having a distribution in respect of transparency of fine and contrasted texture respectively in two defined spectral regions, separating the returning fluxes in accordance with their respective spectral regions, comparing the luminance of said two fluxes and altering the photogram-objective distance to obtain the two maximum fluxes.

4. Apparatus for carrying out the process according to one of claims 1 to 3, in a projection arrangement comprising a light source and condenser therefor, a film carrying means carrying a photogram (2), an objective (3) for projecting the image of the photogram (2) on to a projection screen (4), a photoelectric detector (7), a means (16) for analysing the signals from the detector (7), which controls means (15) for altering focus, characterised in that the apparatus comprises at least one screen member (2, 8, 10, 11) disposed on or close to the photogram (2), an inclined semi-reflective plate (5) positioned on the path of the light between the condenser and the photogram (2) so as to reflect on to the detector (7) the returning light flux from the image formed on the screen (4) through the objective (3), said screen member (2, 8, 10, 11) and the photogram (2).

5. Apparatus according to claim 4 characterised in that the screen member is formed by the transparency regions of the photogram itself.

6. Apparatus according to claim 4 or claim 5 characterised in that the screen member has a distribution in respect of transparency of fine and contrasted texture in a defined spectral region, and that the inclined plate is semi-reflective in said spectral region.

7. Apparatus according to claim 6 characterised in that the defined spectral region is approximately centered in blue and covers about 5 to 10 nm.

8. Apparatus according to claim 4 characterised in that screen members (11, 12) disposed in front of and behind the photogram (2) have a distribution in respect of transparency of fine and contrasted texture respectively in two defined spectral regions, that the inclined semi-reflective plate (12) is formed by two parts, each centered in one of the two spectral regions, and that the photoelectric detector is formed by two cells (13, 14) which are each sensitive in one of the spectral regions.

9. Apparatus according to claim 4 characterised in that screen members (11, 12) disposed in front of and behind the photogram (2) have a distribution in respect of transparency of fine and contrasted texture respectively in two defined spectral regions, that the inclined semi-reflective plate (12) is formed by a rotary disc formed by two parts, each centered in one of the spectral regions, and that the photoelectric detector is formed by a single cell which is sensitive in the two spectral regions.

10. Apparatus according to any one of claims 4 to 9 characterised in that the distribution in respect of transparency of the screen member is sinusoidal.

11. Apparatus according to any one of claims 4 to 9 characterised in that the distribution in respect of transparency of the screen member is in a check pattern.


**Patentansprüche**

1. Verfahren zum automatischen Einstellen von Bildern, die von einem Photogramm auf einen Schirm projiziert werden, dadurch gekennzeichnet, daß man einen Lichtfluß quer über das Photogramm und über wenigstens ein Raster, welches an oder nahe dem Photogramm befestigt ist, in ein Objektiv sendet, um ein Bild des Photogrammes auf dem Schirm zu bilden ;

man einen ersten Lichtfluß, erhalten durch Rückkehr von dem auf dem Schirm gebildeten Bild quer über das Objektiv, von dem Raster und dem Photogramm für einen ersten Abstand zwischen dem Photogramm und dem Objektiv empfängt ;

man die Luminanz dieses ersten Lichtflusses mit derjenigen eines zweiten Flusses, erhalten durch Rückkehr von dem auf dem Schirm gebildeten Bild quer über das Objektiv, von dem Raster und dem Photogramm für einen zweiten Abstand zwischen dem Photogramm und dem Objektiv vergleicht ; und

man den Abstand zwischen Photogramm und Objektiv derart modifiziert, daß ein maximaler Rückkehrlichtfluß erhalten wird.

2. Verfahren nach Anspruch 1, dadurch gekennzeichnet, daß man dem Raster eine sinusförmige Verteilung der Transparenz in einem definierten Spektralbereich erteilt, und das Raster außerhalb dieses Bereiches transparent ist.

3. Verfahren nach Anspruch 1 oder 2, dadurch gekennzeichnet, daß man vor und hinter dem Photogramm ein Raster anordnet, welches eine Transparenzverteilung mit feiner Textur und kontrastiert in den beiden definierten Spektralbereichen hat, man die Rückkehrflüsse nach ihrem jeweiligen Spektralbereich trennt, und man die Luminanz dieser beiden Flüsse vergleicht und den Abstand zwischen dem Photogramm und dem Objektiv modifiziert, um die beiden maximalen Flüsse zu erhalten.

4. Vorrichtung zum Durchführen des Verfahrens nach einem der Ansprüche 1 bis 3, in einem Projektionsapparat, der eine Lichtquelle und deren Kondensor, einen Filmträger, der ein Photogramm (2) trägt, ein Objektiv (3), welches das Bild des Photogrammes (2) auf einen Projektionsschirm (4) projiziert, einen photoelektrischen Detektor (7) und eine die vom Detektor (7) ausgesandten Signale analysierende Einrichtung (16) aufweist, welche eine Einrichtung (15) zum Modifizieren der Einstellung betätigt, dadurch gekennzeichnet, daß die Vorrichtung wenigstens ein Raster (2, 8, 10, 11), welches an oder nahe dem Photogramm (2) angeordnet ist, und ein halbreflektierendes schräges Blatt (5) aufweist, welches in dem Lichtweg zwischen dem Kondensor und dem Photogramm (2) derart angeordnet ist, daß es den Rückkehrlichtfluß des auf dem Schirm (4) gebildeten Bildes quer über das Objektiv (3), das Raster (2, 8, 10, 11) und das Photogramm (2) auf den Lichtdetektor (7) reflektiert.

5. Vorrichtung nach Anspruch 4, dadurch gekennzeichnet, daß das Raster durch die Transparenzzonen des Photogrammes selbst gebildet ist.

6. Vorrichtung nach Anspruch 4 oder 5, dadurch gekennzeichnet, daß das Raster eine Transparenzverteilung mit feiner Textur und kontrastiert in einem definierten Spektralbereich hat, und daß das schräge Blatt in diesem Spektralbereich halbreflektierend ist.

7. Vorrichtung nach Anspruch 6, dadurch gekennzeichnet, daß der definierte Spektralbereich annähernd im Blaubereich zentriert ist und etwa 5 bis 10 nm abdeckt.

8. Vorrichtung nach Anspruch 4, dadurch gekennzeichnet, daß die Raster (11, 12), die vor und hinter dem Photogramm (2) angeordnet sind, eine Transparenzverteilung mit feiner Textur und kontrastiert in den jeweiligen definierten Spektralbereichen haben, und daß das schräge halbreflektierende Blatt (12) in zwei Teilen ausgeführt ist, deren jeder in einem der beiden Spektralbereiche zentriert ist, und der photoelektrische Detektor mit zwei Zellen (13, 14) ausgeführt ist, deren jede gegenüber einem der Spektralbereiche empfindlich ist.

9. Vorrichtung nach Anspruch 4, dadurch gekennzeichnet, daß die vor und hinter dem Photogramm (2) angeordneten Raster (11, 12) eine Transparenzverteilung mit feiner Textur und kontrastiert in dem jeweiligen der beiden definierten Spektralbereiche haben, und daß das schräge halbreflektierende Blatt (12) aus einer Drehscheibe dargestellt ist, die in zwei Teilen gebildet ist, von denen jeder in einem der Spektralbereiche zentriert ist, und der photoelektrische Detektor eine einzige Zelle aufweist, die gegenüber beiden Spektralbereichen empfindlich ist.

10. Vorrichtung nach irgendeinem der Ansprüche 4 bis 9, dadurch gekennzeichnet, daß die Transparenzverteilung des Rasters sinusförmig ist.

11. Vorrichtung nach irgendeinem der Ansprüche 4 bis 9, dadurch gekennzeichnet, daß die Transparenzverteilung des Rasters gekästelt ist.

FIG.:1

FIG.:2

Flux

Fm

Position idéale

FIG.:9

FIG.:3

FIG.:4

2

**0 083 268**

Transparence
de la trame

FIG.:5

en dehors du domaine
$(\lambda_1, \lambda_1 + \Delta\lambda)$

dans le domaine spectral
$(\lambda_1, \lambda_1 + \Delta\lambda)$

Distance

Lame
semi

FIG.:6

Transparence

Réflectance

$\lambda$ $\lambda + \Delta\lambda$

Amplitude
signal sur
cellule

$\lambda_1$ $\lambda_2$

FIG.:7

Déplacement
chariot

Bonne
mise au point

Signal
démodulé

0

FIG.:8

Déplacement
chariot

Bonne
mise au point

3